(19) Europäisches Patentamt
European Patent Office
Office européen des brevets

(11) **EP 2 040 026 B1**

(12) **EUROPÄISCHE PATENTSCHRIFT**

(45) Veröffentlichungstag und Bekanntmachung des Hinweises auf die Patenterteilung:
**19.05.2010 Patentblatt 2010/20**

(51) Int Cl.:
**G01B 11/25** (2006.01)

(21) Anmeldenummer: **08022163.3**

(22) Anmeldetag: **08.03.2007**

(54) **Verfahren und System zur Kalibrierung einer Vorrichtung zur Formmessung einer spiegelnden Oberfläche**

Method and system for calibrating an apparatus for measuring the shape of a reflective surface

Procédé et système de calibrage d'un appareil de mesure de la forme d'une surface réfléchissante

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **05.04.2006 DE 102006015792**

(43) Veröffentlichungstag der Anmeldung:
**25.03.2009 Patentblatt 2009/13**

(62) Dokumentnummer(n) der früheren Anmeldung(en) nach Art. 76 EPÜ:
**07711857.8 / 2 002 203**

(73) Patentinhaber: **Isra Surface Vision GmbH**
**45699 Herten (DE)**

(72) Erfinder:
• **Wienand, Stephan**
**64673 Zwingenberg (DE)**
• **Rudert, Armin, Dr.**
**45131 Essen (DE)**

(74) Vertreter: **KEIL & SCHAAFHAUSEN**
**Patentanwälte**
**Cronstettenstraße 66**
**60322 Frankfurt am Main (DE)**

(56) Entgegenhaltungen:
**EP-A- 1 884 740 WO-A-2005/031251**

• **QUAN C ET AL: "Shape measurement of small objects using LCD fringe projection with phase shifting" OPTICS COMMUNICATIONS, NORTH-HOLLAND PUBLISHING CO. AMSTERDAM, NL, Bd. 189, Nr. 1-3, 1. März 2001 (2001-03-01), Seiten 21-29, XP004229748 ISSN: 0030-4018**

**Beschreibung**

Die Erfindung betrifft ein System zur Formmessung einer spiegelnden Oberfläche mit mindestens einem Musterträger zur Erzeugung eines Musters zur Reflexion an einer spiegelnden Oberfläche und mindestens einer Kamera zur pixelweisen Betrachtung des auf der Oberfläche reflektierten Musters. Ferner wird ein Verfahren zur Kalibrierung des Systems beschrieben, welches insbesondere zur Bestimmung der Position und Orientierung der Kamera und des Musters eingesetzt werden kann. Die Formmessung und die Kalibrierung können auch im Rahmen eines gemeinsamen Verfahrens durchgeführt werden.

Derartige Verfahren, bei denen ein der Form und Lage nach bekanntes Muster in einer reflektierenden Oberfläche gespiegelt wird und das Spiegelbild mit einer Kamera betrachtet und ausgewertet wird, sind zur Formmessung von spiegelnden Oberflächen bekannt. So beschreibt bspw. die DE 197 57 106 A1 eine Vorrichtung zur automatisierten Messung der Form spiegelnder sphärischer oder auch asphärischer Flächen. Dazu wird der zu vermessenden Fläche ein beleuchtetes, diffus streuendes Muster gegenübergestellt, wobei das über die spiegelnde Fläche entstehende Bild des Musters von einer elektronischen Kamera festgehalten wird. Das Muster wird so gewählt, dass auf dem Bildsensor der Kamera ein Bild von annähernd geraden und äquidistanten Streifen entsteht, die sich mittels einer diskreten Fouriertransformation mit besonders hoher Genauigkeit auswerten lassen. Um die Oberfläche in beliebigen Raumrichtungen vermessen zu können, soll das auf dem Bildsensor entstehende Streifensystem zueinander orthogonale Streifen aufweisen.

Aus der DE 103 45 586 A1 sind ein Verfahren und eine Vorrichtung zum Bestimmen der Struktur einer Oberfläche bekannt, bei dem ein flächiges Muster von einem Bilderzeuger erzeugt und an der Oberfläche gespiegelt wird. Das gespiegelte Muster wird von einem Bildaufnehmer abgebildet und anschließend von einer Steuerung ausgewertet. Um ein einfaches, kostengünstiges sowie schnelles flächenhaftes Vermessen der Oberfläche des Objektes zu erreichen, werden aufeinanderfolgend mehrere flächige Muster mit flächigen Strukturen bildpunktweise von dem Bilderzeuger erzeugt, wobei die Strukturen zweier Muster voneinander verschiedene Abmessungen und die einzelnen Bildpunkte zweier Muster jeweils eine definierte Position aufweisen. Da bei diesem Verfahren feine Streifen eines Streifenmusters nicht mehr aufnehmbar sind, werden verhältnismäßig breite Streifen für das Streifenmuster verwendet, die einen sinusförmigen Helligkeitsverlauf aufweisen. Diese Muster werden auf TFT-Monitoren erzeugt.

Die DE 101 27 304 A1 beschreibt ein Verfahren und eine Vorrichtung zur Bestimmung einer dreidimensionalen Kontur einer spiegelnden Oberfläche eines Objekts, bei der eine Reflexion eines bekannten Rasters an der Oberfläche des Objekts mittels eines abbildenden Systems auf einem Empfänger abgebildet und das entstehende Bild ausgewertet wird. Hierzu wird vorgeschlagen, ein bekanntes Raster aus mindestens zwei unterschiedlichen Abständen von der spiegelnde Oberfläche einzusetzen, wobei die relative Lage der Raster und des Empfängers im Raum zueinander bekannt sein müssen.

Bei allen diesen Ansätzen wird davon ausgegangen, dass die Position und Orientierung des Messsystems durch ein geeignetes Kalibrierverfahren vorab festgestellt wurden und somit bekannt sind. Dies lässt sich für kleine zu vermessende Oberflächen auch realisieren. Sollen jedoch größere Flächen mit ausreichender Genauigkeit und der in modernen Produktionsprozessen geforderten Schnelligkeit gemessen werden, ist es in der Regel notwendig, mehrere Kameras zu benutzen, die sich vorzugsweise innerhalb des Musters befinden sollen. Um große Oberflächen zu vermessen, muss das an der spiegelnden Oberfläche reflektierte Muster eine ausreichende Größe aufweisen. Da das Muster zudem veränderbar sein muss, wird das Muster häufig in Form eines Bildes auf eine Mattscheibe projiziert. Hierfür wird jedoch bei großen Flächen viel Platz benötigt, der häufig nicht zur Verfügung steht. Ferner werden zur Erzeugung des Musters Flachbildschirme verwendet, wobei zur Erzeugung großflächiger Muster häufig mehrere Bildschirme eingesetzt werden, die in aufwendigen Kalibrierverfahren auf jede einzelne verwendete Kamera kalibriert werden müssen. Bei der Verwendung mehrerer Bildschirme und Kameras muss ferner eine Methode gefunden werden, wie der Übergang von einer zur nächsten Kamera bzw. zum nächsten Bildschirm realisiert werden kann.

Bei der Verwendung nur eines Musters in einem bestimmten Abstand von der Oberfläche sowie lediglich einer Kamera kann die Form der spiegelnden Oberfläche mit den herkömmlichen Verfahren auch nicht endgültig bestimmt werden, weil sich eine Mehrdeutigkeit zwischen dem Oberflächenwinkel und dem Oberflächenabstand bzw. der Oberflächenhöhe ergibt, die ohne zusätzliche Informationen nicht aufgelöst werden kann. Dieses Problem wird mit den bekannten Verfahren (vgl. bspw. DE 101 27 304 A1) dadurch gelöst, dass mehrere Kameras verwendet oder mehrere Muster in verschiedenem Abstand von der Oberfläche angeordnet werden. Dies hat jedoch den Nachteil eines hohen Geräteaufwands, da jeder Bereich der zu vermessenden Oberfläche durch mehrere Muster und/oder Kameras abgedeckt werden muss.

Aus der WO 2005/031251 A1 ist ein Verfahren zum Bestimmen der Struktur einer Oberfläche bekannt, bei dem aufeinanderfolgend mehrere flächige Streifenmuster mit flächigen Strukturen bildpunktweise von einem Bilderzeuger erzeugt werden. Hierbei wird das Streifenmuster an einer Oberfläche gespiegelt und von einer Optik auf einen Bildaufnehmer abgebildet, wobei das aufgenommene Bild dann von einer Steuerung ausgewertet wird. Der Bildaufnehmer weist eine Matrix von Bildpunktaufnehmern auf. Beispielsweise kann die Matrix von Bildpunktaufnehmern durch einen CCD-Chip oder einen CMOS-Chip oder für die Thermographie durch eine Thermographiekamera ausgebildet sein.

Aus der Veröffentlichung "Shape measurement of small objects using LCD fringe projection with phase shifting", C. Quan et al., Opt. Comm. 189 (2001), Seiten 21 bis 29 ist bekannt, eine dreidimensionale Messung der Form einer Oberfläche durchzuführen. Die Veröffentlichung beschäftigt sich insbesondere mit der Formbestimmung mittels langreichweitiger Mikroskopie, LCD-Ringprojektion und Phasenverschiebungstechnik. Die Kalibrierung wird dadurch realisiert, dass zwei zueinander verschobene Ebenen mit einem Abstand von 50 μm verwendet werden, um eine kleine Abweichung im Ringfeld aufgrund der Linsenvergrößerung des optischen Systems während der Aufnahme des Bildes zu erzeugen. Diese Abweichung wird dafür verwendet, um einen Koeffizienten k zu bestimmen, welcher die Konfiguration des optischen Messsystems charakterisiert.

Wie bereits oben dargestellt bezieht sich die Erfindung auf ein Verfahren zur Kalibrierung eines Systems, welches einen Musterträger mit einem Muster zur Reflexion an einer spiegelnden Oberfläche und eine Kamera zur pixelweisen Betrachtung des an der Oberfläche reflektierten Musters aufweist. Zur Kalibrierung werden zwei großflächige, plane Spiegeloberflächen in paralleler Anordnung verwendet werden, deren genauer Abstand nicht bekannt zu sein braucht. Ein besonderer Vorteil dieser Kalibrierung liegt darin, dass keine weiteren Informationen als die Geometrie des Musters und die genau parallele Ausrichtung der beiden Spiegeloberflächen verwendet werden müssen.

Da sich die plane Lagerung großer Spiegelflächen in der Praxis jedoch als schwierig erwiesen hat, wird die Spiegeloberfläche durch eine Flüssigkeit erzeugt.

Erfindungsgemäß wird also worgeschlagen, dass die spiegelnde Oberfläche durch eine Flüssigkeit erzeugt wird. Auf diese Weise lässt sich das zur Formmessung verwendete System einfach kalibrieren, wobei erfindungsgemäß die Schritte der Kalibrierung und Formmessung miteinander kombiniert und insbesondere nacheinander durchgeführt werden können. Die Kalibrierung kann sowohl vor als auch nach der eigentlichen Formmessung erfolgen. Aufgrund der großen, ideal planen Oberfläche ist es ferner möglich, alle beteiligten Komponenten mit großer Genauigkeit gleichzeitig zu kalibrieren.

Um in etwa vergleichbare optische Bedingungen zu erhalten, wird erfindungsgemäß vorgeschlagen, dass die parallelen Spiegeloberflächen in einer der zu vermessenden reflektierenden Oberfläche vergleichbaren Höhe angeordnet werden.

Dies lässt sich besonders einfach realisieren, wenn die beiden parallelen Spiegeloberflächen durch zwei verschiedene Füllstände der Flüssigkeit in einer Wanne erzeugt werden und/oder die Wanne entsprechend verschoben wird. Durch die Verwendung einer insbesondere ausreichend zähflüssigen Flüssigkeit können zwei ideal parallele Spiegeloberflächen erzeugt werden, die optimale Spiegelqualitäten aufweisen, da die Oberfläche in sich keine Krümmungen oder Unebenheiten aufweist. Erfindungsgemäß ist ferner vorgesehen, dass durch Messungen überprüft wird, ob die Flüssigkeit nach einer Höhenänderung zur Ruhe gekommen ist. Dies kann im einfachsten Fall dadurch erfolgen, dass überprüft wird, ob sich bei aufeinander folgenden Aufnahmen noch Unterschiede in demselben Pixel der Kamera zeigen. Sobald dies nicht mehr der Fall ist, kann von einem stationären oder ruhenden Flüssigkeitsspiegel ausgegangen werden.

Außerdem kann die Spiegelfläche durch die Verwendung der Flüssigkeit in einer ausreichend dimensionierten Wanne so groß ausgebildet werden, dass alle Musterträger und Kameras des Systems in ein gemeinsames Koordinatensystem kalibriert werden können.

Als Flüssigkeit eignet sich insbesondere Glycerin.

Schließlich wird erfindungsgemäß in Anspruch 6 ein System zur Formmessung einer spiegelnden Oberfläche mit mindestens einem Musterträger zur Erzeugung eines Musters, welches auf der spiegelnden Oberfläche reflektierbar ist, mindestens einer Kamera zur pixelweisen Betrachtung des an der Oberfläche reflektierten Musters und einer Auswerteeinheit zur Auswertung der Kamerabilder und zur Formbestimmung und/oder Kalibrierung vorgeschlagen. Erfindungsgemäß ist vorgesehen, dass das System eine Einrichtung zur Anordnung einer großflächigen, planen Spiegeloberfläche aufweist, wobei die Spiegeloberfläche durch eine Flüssigkeit gebildet wird.

Als Einrichtung zur Anordnung einer planen Spiegeloberfläche eignet sich insbesondere eine Wanne, in die die Flüssigkeit eingefüllt werden kann. Durch verschieden hohe Füllstände in der Wanne ist es auf einfache Weise möglich, mehrere parallele Spiegeloberflächen zu auszubilden und die Höhe der Spiegeloberflächen in etwa an die Position der zu vermessenden Objekte anzupassen. Ferner kann insbesondere auch alternativ die Wanne angehoben bzw. abgesenkt werden.

In einer bevorzugten Ausgestaltung des Systems kann ein Musterträger ein Monitor, insbesondere ein TFT-Monitor sein, auf dem verschiedene Muster darstellbar sind.

Ferner können erfindungsgemäß mehrere Musterträger in einem Viereck angeordnet sein, wobei vorzugsweise in jedem Kreuzungspunkt der Musterträger je eine Kamera angeordnet ist. Natürlich ist es auch möglich, die Monitore abgewinkelt und sogar senkrecht zueinander anzuordnen. Die optimale Anordnung der Monitore ergibt sich insbesondere aus der zu vermessenden Oberflächenform, deren optimaler Verlauf häufig bekannt ist, so dass die Anordnung der Monitore diesbezüglich optimiert werden kann.

Zur Analyse des von der Kamera aufgenommenen Musters, welches bspw. eine Mustersequenz mindestens zwei unterscheidbaren, periodisch auftretenden Musterbestandteilen aufweist, kann ein phasenauswertendes Verfahren, ein zeitlich kodiertes Verfahren und/oder ein frequenzkodiertes Verfahren verwendet werden. Dieses Verfahren kann entweder bei der Kalibrierung oder bei der Formmessung oder bei beiden Verfahren angewendet werden. Beispielsweise kann die Mustersequenz zwei verschiedene Lichtintensitäten aufweisen. Es hat sich herausgestellt, dass durch dieses Verfahren eine besonders hohe Ortsauflösung erreicht werden kann. Daher eignet es sich auch hervorragend, um die Position des in dem Pixel abgebildeten Musterpunktes im Muster zu bestimmen. Ein zeitlich und/oder frequenzkodiertes Verfahren kann bspw. derart aussehen, dass verschiedene Muster zeitlich nacheinander und/oder für eine verschiedene Zeitdauer auf den Musterträgern dargestellt und von den Kameras aufgenommen werden. In einer nachfolgenden Auswertung kann, weil die Art der Muster bekannt ist, durch eine im Wesentlichen kombinatorische Auswertung ermittelt werden, welches Kamerapixel auf welchen Musterbereich schaut. Der simpelste Ansatz läge darin, jedes Monitorpixel eines als Bildschirm ausgebildeten Musterträgers einzeln anzusteuern und dem jeweiligen Kamerapixel zuzuordnen. Durch eine geschickte Musterauswahl und zeitliche Abfolge verschiedener Muster kann diese Bestimmung jedoch beschleunigt und/oder verfeinert werden. Eine weitere Möglichkeit liegt in einem phasenauswertenden Verfahren, in dem das Muster bspw. einen bestimmten Helligkeitsverlauf aufweist. Durch Verschieben des Musters kann dann mittels einer Phasenanalyse eine genaue Lokalisierung des Musterpunkts erfolgen. Dazu wird das Muster beispielsweise mindestens dreifach verschoben. Es ist auch eine Kombination dieser beiden Verfahren denkbar.

Weitere Vorteile, Merkmale und Anwendungsmöglichkeiten der vorliegenden Erfindung ergeben sich auch aus der nachfolgenden Beschreibung von Ausführungsbeispielen und der Zeichnung.

Es zeigen:

Fig. 1   ein erfindungsgemäßes System zur Formmessung einer spiegelnden Oberfläche gemäß einer ersten Ausführungsform;

Fig. 2   ein erfindungsgemäßes System zur Formmessung einer spiegelnden Oberfläche gemäß einer zweiten Ausführungsform;

Fig. 3   die Musterträger und Kameras eines Systems zur Formmessung ei- ner spiegelnden Oberfläche gemäß einer dritten Ausführungsform;

Fig. 4   den Strahlengang für ein Kamerapixel während der Kalibrierung eines erfindungsgemäßen Systems und

Fig. 5   für die Auswertung der bei der Kalibrierung verwendete Dreiecke im Strahlengang gemäß Fig. 4.

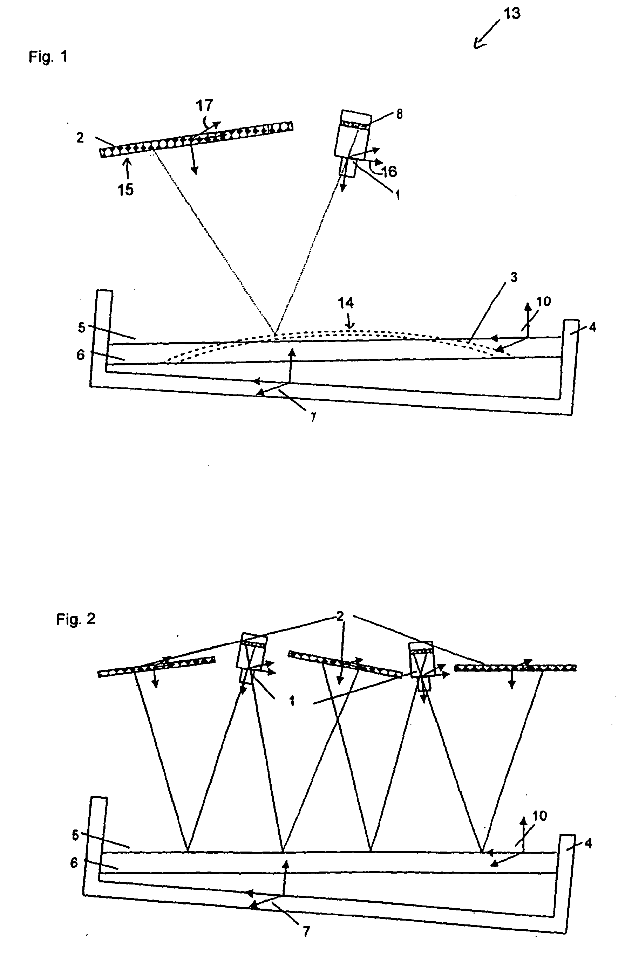

In Fig. 1 ist der grundsätzliche Aufbau eines Systems 13 zur Formmessung einer spiegelnden Oberfläche 14 eines zu vermessenden Objekts 3 dargestellt. Das System 13 weist eine Kamera 1 auf, welche über die spiegelnde Oberfläche 14 das Muster 15 eines Musterträgers 2 betrachtet. Um die Form der spiegelnden Oberfläche 14 des Objekts 3 bestimmen zu können, muss die Beziehung zwischen der Kamera 1 und dem Muster 15 des Musterträgers 2 bekannt sein. Hierzu werden das Koordinatensystem 16 der Kamera 1 und das Koordinatensystem 17 des Musters 15 in einer Kalibrierung bestimmt. Zusätzlich können sowohl die Kamera 1 als auch das Muster 15 in ein weltfestes Koordinatensystem 7 einkalibriert werden. Dies ist jedoch nicht unbedingt notwendig, verbessert jedoch die Übersichtlichkeit des Gesamtsystems. Anstelle des weltfesten Koordinatensystem 7 können auch das Koordinatensystem 16 der Kamera 1 oder das Koordinatensystem 17 des Musters 15 als weltfestes Koordinatensystem benutzt werden. Damit sind die Positionen und Orientierungen sowohl der Kamera 1 als auch des Musters 15 in dem System 13 bekannt.

Die Kamera 1 ist zur pixelweisen Betrachtung des auf der reflektierenden Oberfläche 14 reflektierten Musters 15 eingerichtet. In der Beschreibung des Systems 13 wird die Kamera 1 zunächst als einfache Lochkamera modelliert, für die keine internen Kameraparameter wie die theoretische Bildweite, Verzerrung, Hauptpunktverschiebung oder dgl. benötigt werden. Diese können jedoch, soweit sie bekannt sind, zur schnelleren Konvergenz des Verfahrens genutzt werden, indem die Kamera 1 als korrigierte Lochkamera modelliert wird, so dass dann mit Hilfe der bekannten Kameraparameter das von der Kamera 1 aufgenommene Bild 8 in ein mit den bekannten Parametern korrigiertes Bild umgerechnet wird. Dieses Bild wird im weiteren Verfahren jedoch wieder so behandelt, als wenn es von einer einfachen Lochkamera aufgenommen wäre.

Wenn eine Kamera direkt schräg auf ein beliebiges Muster schaut, ist es möglich, alleine durch Auswertung des Bildes eine räumliche Beziehung zwischen dem ebenen, bekannten Muster und der Kamera herzustellen. Hierbei ist es vorteilhaft, wenn ein Muster 15 zur Kalibrierung verwendet wird, das sich in exakt der gleichen Lage wie das später zur Formmessung benutzte Muster 15 befindet, weil die genaue Beziehung zwischen dem Muster 15 und der Kamera 1 für die Auswertung der Formmessung benötigt wird. Die Ausprägung des Musters 15 kann verschieden sein. Dazu ist als Musterträger 2 ein Flachbildschirm, bspw. ein TFT-Bildschirm, vorgesehen, auf dem beliebige Muster 15 darstellbar sind. Aufgrund der bekannten Pixelmaße des Flachbildschirms 2 ist damit auch die Geometrie des dargestellten Musters 15 genau bekannt. Es sind jedoch auch andere Realisierungen für einen Musterträger 2, bspw. austauschbare Platten mit einem vermessenen Muster in einem Halter, denkbar.

Wie aus Fig. 1 ersichtlich, kann die Kamera das Muster 15 auf dem Musterträger 2 jedoch nicht sehen, wenn sich kein spiegelndes Messobjekt 3 in dem Messvolumen befindet. Sofern die Kamera 1 und der Musterträger 2 in ihrer bei der späteren Formmessung verwendeten Anordnung kalibriert werden sollen, muss also ein in der Form genau bekanntes Objekt mit spiegelnden Eigenschaften in zu dem Messobjekt 3 vergleichbarer Position angeordnet werden. Insbesondere sollte es sich um eine exakt ebene, spiegelnde Oberfläche handeln, weil sich dann für die Kalibrierung einfache mathematische Beziehungen ergeben.

Da durch die nicht bekannte Lage dieses ebenen Spiegels zusätzliche Freiheitsgrade in das zu lösende Gleichungssystem eingebracht werden, muss das zur Kalibrierung verwendete Muster 15 über mindestens zwei Spiegel in verschiedener Lage betrachtet werden. Die einfachste Lösung hierzu ist die Anordnung zweier exakt paralleler Spiegel in verschiedenen Höhen, die nacheinander betrachtet werden, wobei die Höhe der Spiegel selbst nicht bekannt sein muss. Diese beiden Spiegeloberflächen 5, 6 sind in Fig. 1 durch durchgezogene Striche dargestellt.

In der Praxis handelt es sich bei den zu vermessenden Objekten 3 bspw. um Windschutzscheiben von Kraftfahrzeugen. Bei diesen Abmessungen von Objekten 3 ist die Herstellung und Anordnung der großflächigen Spiegeloberflächen 5, 6 nicht ganz einfach, weil es sehr teuer ist, Spiegel von ausreichender Ebenheit in entsprechend großen Abmessungen herzustellen und diese verbiegungsfrei in zwei verschiedenen Höhen zu lagern. Zur Erzeugung der beiden parallelen Spiegeloberflächen 5, 6 ist der untere Teil der Anlage 13 daher als Wanne 4 ausgebildet. In diese Wanne 4 wird eine Flüssigkeit mit ausreichender Zähigkeit eingegossen, die eine gut spiegelnde Oberfläche aufweist. Die beiden Höhen werden dadurch realisiert, dass nacheinander zwei verschiedene Flüssigkeitsmengen in die Wanne 4 eingefüllt werden. Diese Anordnung hat den Vorteil, dass die beiden Spiegeloberflächen 5, 6 ideal eben und parallel angeordnet sind. Außerdem kann die Orientierung dieser Spiegeloberflächen jederzeit reproduziert werden, was für die Durchführung der Formmessung nicht unbedingt erforderlich ist, jedoch die Handhabung des Messsystems z.B. bei Austausch einer defekten Kamera und der dann erforderlichen Nachkalibrierung erleichtert. Eine geeignete Flüssigkeit mit ausreichender Zähigkeit ist Glycerin.

In Fig. 2 ist ein vergleichbares System 13 dargestellt wird, welches jedoch mehrere (drei) Musterträger 2 und mehrere (zwei) Kameras 1 aufweist, die nebeneinander angeordnet sind und insgesamt einen großen Objektbereich abdecken, in dem die Oberfläche eines Objekts vermessen werden kann. Durch das Vorsehen der mit Glycerin gefüllten Wanne 4 zur Erzeugung der Spiegeloberflächen 5, 6 ist es auf einfache Weise möglich, alle Muster 15 der Musterträger 2 und alle Kameras 1 gleichzeitig in ein gemeinsames Koordinatensystem 10 zu kalibrieren, da die Spiegeloberflächen 5, 6 der Flüssigkeit einfach in beliebiger Größe hergestellt werden können.

Dabei definiert die Flüssigkeitsoberfläche 5, 6 vorzugsweise die x-y-Ebene eines gemeinsamen Koordinatensystems für alle Kameras 1 und Musterträger 2. Wenn darüber hinaus die Kameras 1 und die Muster 15 bzw. die Musterträger 2 derart angeordnet sind, dass jede Kamera 1 mindestens mit einer anderen Kamera 1 gemeinsam ein Muster 15 auf demselben Musterträger 2 sieht, kann darüber hinaus der Bezug zwischen allen Komponenten in der Rotation um die Flächennormale der Spiegeloberfläche 5, 6 und die Verschiebung auf dieser Fläche gegeneinander bestimmt werden. Dabei ist es nicht unbedingt notwendig, dass jede der beiden Kameras 1 auf einem Musterträger 2 denselben Musterbereich 15 abbildet, da wegen der bekannten Geometrie des Gesamtmusters 15 auf dem Musterträger 2 der Bezug zwischen zwei unterschiedlichen Musterbereichen 15 hergestellt werden kann. Als Nullpunkt des Koordinatensystems 10 kann ein beliebiger Punkt auf der Fläche gewählt werden. Gleiches gilt für den Nullpunkt der Rotation um die Flächennormale. So können alle Komponenten gemeinsam in ein Koordinatensystem 10 kalibriert werden.

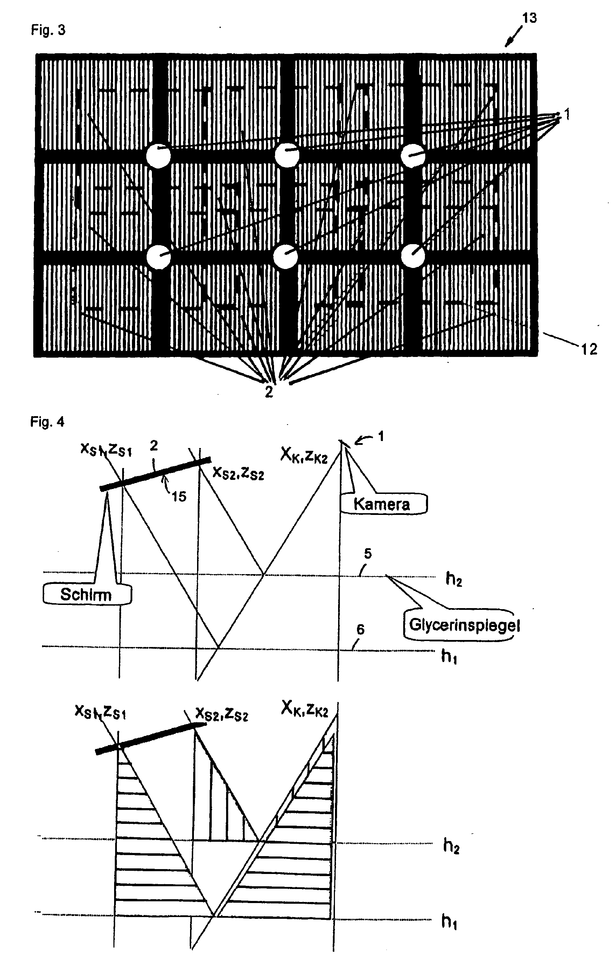

Eine besonders zweckmäßige Anordnung für ein erfindungsgemäßes System 13 ist in Fig. 3 dargestellt, in dem n x m Musterträger matrixartig in einem Viereck angeordnet sind. In jedem Kreuzungspunkt der Musterträger 2 befindet sich eine Kamera 1, so dass jede Kamera 1 vier Musterträger 2 sieht und - abgesehen von den Musterträgern 2 am Rand der Matrix - alle Musterträger 2 von vier Kameras 1 gesehen werden. Die entsprechenden Bildbereiche 12 der Kameras 1 sind gestrichelt dargestellt.

Auch wenn es zur Messung der Form eines Objekts 3 nicht notwendig ist, ein reproduzierbares Koordinatensystem festzulegen, weil die Form des Objekts bezüglich Koordinatentransformationen zwischen verschiedenen Bezugskoordinatensystemen natürlich invariant ist, ist es in einigen Fällen wünschenswert, einen Bezug zu einem fest vorgegebenen Koordinatensystem herzustellen. Dies kann bspw. die Handhabung des gesamten Messsystems 13 erleichtern.

Die Orientierung der X-Y-Ebene in dem Koordinatensystem 10 ist durch den Flüssigkeitsspiegel immer gleich. Für die anderen Freiheitsgrade können von der Kamera 1 erkennbare Marken angebracht werden. So kann man bspw. auf einem Musterträger 2 einen Nullpunkt definieren und diesen so kennzeichnen, dass er von mindestens einer Kamera 1 erkannt werden kann. Durch Festlegung eines zweiten Fixpunktes kann auch der Nullpunkt der Rotation um die Flächennormale festgelegt werden. Bei Verwendung von Flachbildschirmen als Musterträger 2 kann diese Kennzeichnung auch auf dem Bildschirm angezeigt werden.

Als gemeinsames Koordinatensystem 10 kann daher zunächst das Koordinatensystem verwendet werden, dessen X-Y-Ebene mit der Spiegeloberfläche 5, 6 zusammenfällt. Ausgehend von diesem Koordinatensystem 10 kann dann eine Beziehung zu einem beliebigen weltfesten Koordinatensystem 7 hergestellt werden, das bspw. mit der Wanne 4 in Verbindung steht.

Mit Bezug auf Fig. 4 wird nachfolgend die Einrichtung des System 13 anhand eines auf einem Flachbildschirm 2 abgebildeten Musters 15 detailliert beschrieben. Dabei wird für jedes Pixel der Kamera 1 des Systems 13 das Pixel des Flachbildschirms 2 ermittelt, auf den die Kamera 1 bzw. das jeweilige Kamerapixel blickt. Diese Messung ist zunächst unabhängig von der Kalibrierung und legt die Blickrichtung der Kamera 1 für jedes Pixel fest.

Dabei werden als Parameter die Positionen der Kamera $x_k$, $y_k$ und $z_k$ im Bezugskoordinatensystem bestimmt. Der durch die Koordinaten $x_k$, $y_k$ und $z_k$ festgelegte Punkt bezeichnet den Punkt, in dem sich alle Strahlen, die in die Kamera gelangen, im Objektiv treffen. Ferner werden als weitere Parameter die Positionen jedes Pixels des Flachbildschirms 2 im Bezugskoordinatensystem sowie die Blickrichtung jedes Pixels der Kamera 1 inklusive der (mitgemessenen) Objektivverzerrung im Bezugskoordinatensystem bestimmt.

Unter der Anordnung des Systems 13 aus Kameras 1 und Flachbildschirmen 2 (TFT-Monitoren) wird eine mit Glycerin gefüllte Wanne 4 gestellt, die in verschiedenen Höhen angebracht werden kann. Diese Wanne 4 ist auf der Innenseite geschwärzt. Sobald das in der Wanne befindliche Glycerin zur Ruhe kommt, stellt sich eine optisch einwandfreie und ebene spiegelnde Oberfläche 5, 6 ein. Dann werden für zwei Höhen ($h_1$, $h_2$) jedem Pixel der Kamera 1 das entsprechende Pixel des Flachbildschirms 2 zugeordnet, auf den der Strahl des betreffenden Kamerapixels durch den Spiegel 5, 6 reflektiert wurde. Die Größen $h_1$ und $h_2$ sind die beiden Höhen, in denen der Glycerinspiegel (Spiegeloberfläche 5, 6) vermessen wurde.

Die Messung erfolgt dadurch, dass auf dem Flachbildschirm 2 nacheinander geeignete Muster 15 angezeigt und deren Spiegelbilder 8 von der Kamera 1 aufgenommen werden. Durch eine geeignete Auswahl der Muster 15 kann nach einer bestimmten Anzahl von Bildern 8 jedes einzelne Bildschirmpixel identifiziert werden. Hierzu kann man jedes Pixel in seiner Helligkeitsfolge kodieren (bspw. als Grey-Code) oder man benutzt einen geeigneten Grauwertverlauf oder eine Folge von Grauwertverläufen.

Nachfolgend wird ein Beispiel für eine geeignete Parametrierung angegeben, die jedoch variiert werden kann. Der Koordinatenursprung wird mit dem Pixel (0,0) eines beliebigen Flachbildschirms 2 verbunden. Durch die Auswahl der Raumkoordinate dieses Pixels ist die Position des Koordinatensystems festgelegt. Die Spiegeloberfläche 5, 6 des Flüssigkeitsspiegels wird parallel zur X-Y Ebene des Koordinatensystems 10 gewählt, so dass die Z-Richtung des Koordinatensystems 10 senkrecht auf der Spiegeloberfläche 5, 6 steht. Die X-Achse des Koordinatensystems verläuft senkrecht zu der langen Seite des Flachbildschirms 2, der den Ursprung definiert.

Durch diese Auswahl wird ein eindeutiges Koordinatensystem 10 vorgegeben, in dem alle Systemkomponenten vermessen werden können.

Produktionsbedingt ist der Abstand zweier Pixel auf einem Flachbildschirm 2 hochgenau bekannt. Für einen 17"-Monitor beträgt dieser Abstand bspw. 0,264 mm. Sofern die Lage eines Monitorpixels im Raum und die drei Raumwinkel, in denen der Monitor im Raum angeordnet ist, bekannt sind, kann für jedes Monitorpixel die Position im Raum genau bestimmt werden. Diese Metrik ist in allen Flachbildschirmen 2 exakt gleich und garantiert somit, dass die dreidimensionalen Weltkoordinaten ebenfalls metrisch sind.

In Fig. 4 ist nun der Strahlengang für ein einziges Pixel einer Kamera 1 dargestellt. Dabei sind die Koordinaten $x_k$, $y_k$ und $z_k$ die Positionen der Kamera, $h_1$ und $h_2$ die Höhen der Spiegeloberflächen 5, 6 sowie $x_{s1}$, $y_{si}$ und $z_{si}$ die Raumkoordinaten, auf die ein Kamerapixel bei Reflexion in der Höhe $h_1$ gespiegelt wird. Dabei sind die in dem unteren Teil von Fig. 4 in unterschiedlichen Graustufen dargestellten Dreiecke in mathematischem Sinne ähnlich.

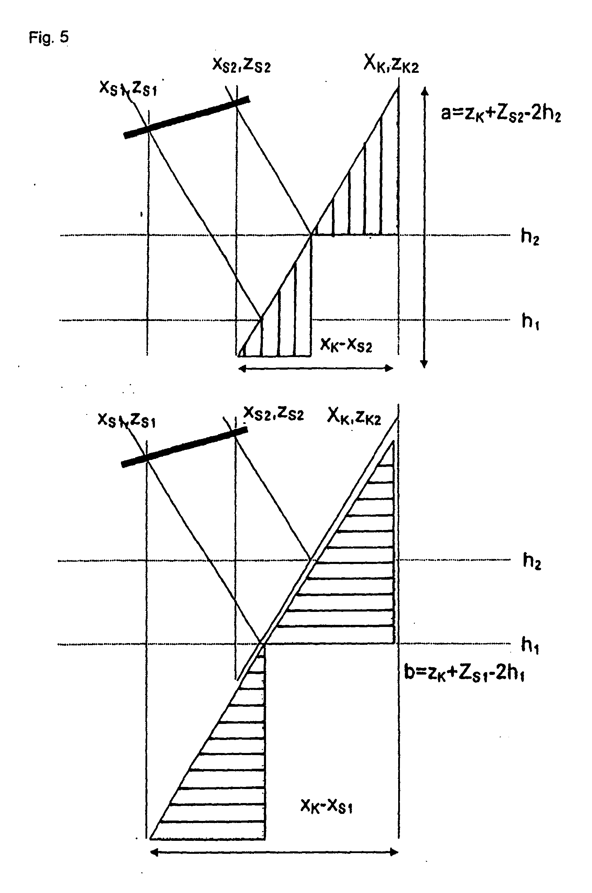

Entsprechend der Darstellung in Fig. 5 lassen sich die beiden kleinen und beiden großen Dreiecke zu je einem Dreieck zusammenfassen. Die Höhe und Breite dieser beiden Dreiecke ist dann bekannt. Aufgrund der Ähnlichkeit der Dreiecke gilt die folgende Beziehung:

$$\frac{a}{x_k - x_{S2}} = \frac{b}{x_k - x_{S1}} \text{ mit } a = z_K + z_{S1} - 2h_1 \text{ und } b = z_K + z_{S2} - 2h_2$$

Mit diesem Zusammenhang kann ein Parameter in der Gleichung berechnet werden. Nach $x_k$ aufgelöst lautet diese Gleichung:

$$x_K = \frac{ax_{S1} - bx_{S2}}{a - b}$$

Die Rechnung für $y_k$ ergibt sich in analoger Weise durch Tauschen der Koordinatenrichtungen X und Y.

Diese Gleichung wird für jedes Pixel der Kamera 1 aufgestellt. Die Bedingung für die Lösung des Gleichungssystems ist, dass sich alle Strahlen von Pixeln, die zu einer bestimmten Kamera 1 gehören, in einem Punkt schneiden. Das daraus entstehende Gleichungssystem wird durch einen geeigneten, bekannten Optimierungsalgorithmus, bspw. Newton-Gauss-Jordan, gelöst. Zur Vereinfachung der Optimierung können auch nur einige ausgewählte Pixel verwendet werden.

Als vorteilhafte Startwerte für die Optimierung können geeignete Werte benutzt werden. So kann die Position aller Flachbildschirme 2 als Position des Pixels 0,0 grob vermessen und als Startwert verwendet werden. Gleiches gilt für die drei Raumwinkel jedes Monitors. Ferner werden die Höhen jeder Kamera Z sowie der Spiegelflächen 5, 6 $h_1$ und $h_2$ grob vermessen und als Startwert verwendet.

Für jeden Flachbildschirm 2 werden dann die X, Y und Z-Koordinate des Pixels (0,0) sowie die drei Raumwinkel seiner Lage optimiert. Entsprechendes gilt für die Höhen $h_1$ und $h_2$ der Spiegeloberflächen 5, 6 sowie der Höhe der Kameraposition Z. Als Ergebnis der Optimierung erhält man die korrekte Position und Lage jedes Flachbildschirms 2 sowie jeder Kamera 1. Zusätzlich ist für jedes Pixel, für das mindestens für eine Höhe eine gültige Messung durchgeführt wurde, der Punkt bekannt, auf den die Kamera in der Ebene z=0 blickt. Für die Reflexionen in den Höhen $h_1$ und $h_2$ ergibt sich folgende Beziehung

$$x_{z=0} = x_k - \frac{z_k(x_k - x_{S1})}{z_k + z_{S1} - 2h_1} \quad \text{und} \quad x_{z=0} = x_k - \frac{z_k(x_k - x_{S2})}{z_k + z_{S2} - 2h_2}$$

Diese Gleichungen ergeben sich aus der Betrachtung der Dreiecke gemäß Fig. 5.

Da diese Rechnung für jedes Kamerapixel separat durchgeführt wird, ist nach der Kalibrierung für jedes Pixel der Kamera 1 die Blickrichtung im Raum bekannt, und zwar einschließlich der Objektivverzerrung, weil diese bei der Bildaufnahme ebenfalls berücksichtigt bzw. mitgemessen wurde. Anstelle der Modellierung der Kamera mit Verzerrungsmodellen wird bei dieser Vorgehensweise also für jedes Pixel explizit eine Blickrichtung bestimmt.

Grundsätzlich könnte auch ein Verzerrungsmodell mit modelliert werden. Hierdurch ändert sich das zu optimierende Gleichungssystem dahingehend, dass diese Parameter zusätzlich auftauchen und optimiert werden, was einen erhöhten Rechenaufwand bedeutet.

Weiterhin könnte für jede Spiegelhöhe eine im Prinzip bekannte Kalibrierung auf ein ebenes Muster durchgeführt werden, ohne die Tatsache zu berücksichtigen, dass die Kamera 1 in Wirklichkeit auf einen Spiegel des Musters 15 schaut. Dann ergibt sich für jede Spiegelhöhe $h_1$ und $h_2$ eine andere, virtuelle Kameraposition. Da jedoch bekannt ist, dass es sich in Wirklichkeit immer um dieselbe Kameraposition handelt und nur die Spiegelhöhen (bei exakt parallelen Spiegeloberflächen 5, 6) verschieden waren, kann ein Gleichungssystem aufgestellt werden, das diese Randbedingung nutzt. Durch Optimierung des Gleichungssystems erhält man dann die richtige Position der Kamera 1.

Diese Methode hat den Vorteil, dass die Kalibrierung in zwei Schritte zerlegt werden kann und für den ersten Schritt bekannte Standardmethoden benutzt werden können. Sie hat jedoch den Nachteil, dass man für den ersten Schritt nur das Muster 15 auf einem Musterträger 2 nutzen kann. Bei Anordnung mit mehreren Kameras 1 deckt ein Musterträger 2 in der Praxis aber nur einen Teil des Bildfeldes ab, und dies auch noch einseitig, d.h. nur auf einer Seite des Bildfeldes. Eine gute Kalibrierung lässt sich jedoch nur durchführen, wenn das Bildfeld einigermaßen gleichmäßig mit Musterpunkten belegt ist.

**Bezugszeichenliste**

1 Kamera
2 Musterträger, Flachbildschirm
3 Objekt
4 Wanne
5 Spiegeloberfläche zur Kalibrierung
6 Spiegeloberfläche zur Kalibrierung
7 weltfestes Koordinatensystem
8 Bild, Kamerapixel
9 Marke
10 gemeinsames Koordinatensystem
11 abgedeckter Bereich

12    Bildfeld einer Kamera
13    System
14    spiegelnde/reflektierende Oberfläche
15    Muster
16    Koordinatensystem der Kamera
17    Koordinatensystem des Musters

**Patentansprüche**

**1.** Verfahren zur Kalibrierung eines Systems zur Formmessung einer spiegelnden Oberfläche, wobei das System einen Musterträger (2) mit einem Muster (15) zur Reflexion an einer spiegelnden Oberfläche (14) und eine Kamera (1) zur pixelweisen Betrachtung des an der Oberfläche (14) reflektierten Musters (15) aufweist, **dadurch gekennzeichnet, dass** zur Kalibrierung der Positionen und der Orientierung von Kamera (1) und Muster (15) und der Blickrichtung eines jeden Pixels der Kamera (1) zwei großflächige, plane Spiegeloberflächen (5, 6) in paralleler Anordnung verwendet werden und die Spiegeloberfläche (5, 6) durch eine Flüssigkeit erzeugt wird.

**2.** Verfahren nach Anspruch 1, **dadurch gekennzeichnet, dass** die Spiegeloberflächen (5, 6) in einer der zu vermessenden, reflektierenden Oberfläche (14) vergleichbaren Höhe angeordnet werden.

**3.** Verfahren nach Anspruch 1 oder 2, **dadurch gekennzeichnet, dass** die Spiegeloberflächen (5, 6) durch zwei verschiedene Füllstände der Flüssigkeit in einer Wanne (4) und/oder ein Verschieben der Wanne (4) erzeugt werden.

**4.** Verfahren nach einem der Ansprüche 1 bis 3, **dadurch gekennzeichnet, dass** der Musterträger (2) und die Kamera (1) in ein gemeinsames Koordinatensystem (10) kalibriert werden.

**5.** Verfahren nach einem der Ansprüche 1 bis 4, **dadurch gekennzeichnet, dass** die Flüssigkeit ausreichend zähflüssig ausgebildet ist und vorzugsweise Glycerin ist.

**6.** System zur Formmessung einer spiegelnden Oberfläche (14) mit mindestens einem Musterträger (2) zur Erzeugung eines Musters (15), welches auf der spiegelnden Oberfläche (14) reflektierbar ist, mindestens einer Kamera (1) zur pixelweisen Betrachtung des auf der Oberfläche (14) reflektierten Musters (15) und einer Auswerteeinheit zur Auswertung der Kamerabilder (8) zur Formbestimmung und/oder Kalibrierung, **dadurch gekennzeichnet, dass** das System eine Einrichtung (4) zur Anordnung einer großflächigen planen Spiegeloberfläche (5, 6) aufweist, wobei die Spiegeloberfläche durch eine Flüssigkeit gebildet ist.

**7.** System nach Anspruch 6, **dadurch gekennzeichnet, dass** die Einrichtung zur Anordnung der planen Spiegeloberfläche (5, 6) eine Wanne (4) ist.

**8.** System nach Anspruch 6 oder 7, **dadurch gekennzeichnet, dass** ein Musterträger (2) ein Flachbildschirm ist.

**9.** System nach einem der Ansprüche 6 bis 8, **dadurch gekennzeichnet, dass** mehrere Musterträger (2) in einem Viereck angeordnet sind und in Kreuzungspunkten der Musterträger (2) Kameras (1) angeordnet sind.

**10.** System nach einem der Ansprüche 6 bis 9, **dadurch gekennzeichnet, dass** die Musterträger (2) derart angeordnet sind, dass sie die sich durch die spiegelnde Oberfläche (14) ergebenden Raumwinkel abdecken.

**Claims**

**1.** Method for calibrating a system for measuring the shape of a reflective surface, the system comprising a pattern carrier (2) comprising a pattern (15) for reflecting on a reflective surface (14) and a camera (1) for viewing, pixel by pixel, the pattern (15) which is reflected on the surface (14), **characterised in that** for calibrating the positions and the orientation of the camera (1) and pattern (15) and the viewing direction of each pixel of the camera (1), two large-area, planar reflective surfaces (5, 6), arranged in parallel, are used and the reflective surface (5, 6) is produced by a liquid.

**2.** Method according to Claim 1, **characterised in that** the reflective surfaces (5, 6) are arranged at a height comparable with the reflective surface (14) to be measured.

3. Method according to Claim 1 or 2, **characterised in that** the reflective surfaces (5, 6) are produced by two different filling levels of the liquid in a tray (4) and/or a displacement of the tray (4).

4. Method according to one of Claims 1 to 3, **characterised in that** the pattern carrier (2) and the camera (1) are calibrated in a common coordinate system (10).

5. Method according to one of Claims 1 to 4, **characterised in that** the liquid is configured to be sufficiently viscous and is preferably glycerin.

6. System for measuring the shape of a reflective surface (14) comprising at least one pattern carrier (2) for producing a pattern (15) which may be reflected on the reflective surface (14), at least one camera (1) for viewing, pixel by pixel, the pattern (15) reflected on the surface (14) and an evaluation unit for evaluating the camera images (8) for determining the shape and/or calibration, **characterised in that** the system comprises a device (4) for arranging a large-area, planar reflective surface (5, 6), the reflective surface being formed by a liquid.

7. System according to Claim 6, **characterised in that** the device for arranging the planar reflective surface (5, 6) is a tray (4).

8. System according to Claim 6 or 7, **characterised in that** a pattern carrier (2) is a flat-screen monitor.

9. System according to one of Claims 6 to 8, **characterised in that** a plurality of pattern carriers (2) are arranged in a quadrangle and cameras (1) are arranged at intersection points of the pattern carriers (2).

10. System according to one of Claims 6 to 9, **characterised in that** the pattern carriers (2) are arranged so that they cover the spatial angles resulting from the reflective surface (14).

**Revendications**

1. Procédé pour le calibrage d'un système pour la mesure de la forme d'une surface réfléchissante, le système présentant un support de dessin (2) avec un dessin (15) pour la réflexion sur une surface (14) réfléchissante et une caméra (1) pour l'examen pixel par pixel du dessin (15) affiché sur la surface (14), **caractérisé en ce que** deux surfaces de miroir (5, 6) planes, de grande surface, sont utilisées dans un agencement parallèle pour le calibrage des positions et de l'orientation de la caméra (1) et du dessin (15) et du sens de visée de chaque pixel de la caméra (1) et la surface de miroir (5, 6) est générée par un liquide.

2. Procédé selon la revendication 1, **caractérisé en ce que** les surfaces de miroir (5, 6) sont disposées à une hauteur comparable à la surface (14) réfléchissante et à mesurer.

3. Procédé selon la revendication 1 ou 2, **caractérisé en ce que** les surfaces de miroir (5, 6) sont générées par deux niveaux de remplissage différents du liquide dans une cuve (4) et/ou par un déplacement de la cuve (4).

4. Procédé selon l'une quelconque des revendications 1 à 3, **caractérisé en ce que** le support de dessin (2) et la caméra (1) sont calibrés dans un système de coordonnées (10) commun.

5. Procédé selon l'une quelconque des revendications 1 à 4, **caractérisé en ce que** le liquide est conçu de façon suffisamment semi-fluide et est de préférence de la glycérine.

6. Système pour la mesure de la forme d'une surface (14) réfléchissante comprenant au moins un support de dessin (2) pour générer un dessin (15), qui peut être réfléchi sur la surface (14) réfléchissante, au moins une caméra (1) pour l'examen pixel par pixel du dessin (15) réfléchi sur la surface (14) et une unité d'analyse pour l'analyse des images de caméra (8) pour la détermination de la forme et/ou pour le calibrage, **caractérisé en ce que** le système présente un appareil (4) pour l'agencement d'une surface de miroir (5, 6) plane de grande surface, la surface de miroir étant formée par un fluide.

7. Système selon la revendication 6, **caractérisé en ce que** le dispositif pour l'agencement de la surface de miroir (5, 6) plane est une cuve (4).

8. Système selon la revendication 6 ou 7, **caractérisé en ce qu'**un support de dessin (2) est un écran plat.

9. Système selon l'une quelconque des revendications 6 à 8, **caractérisé en ce que** plusieurs supports de dessin (2) sont disposés dans un carré et des caméras (1) sont disposées en des points de croisement des supports de modèle (2).

10. Systèmes selon l'une quelconque des revendications 6 à 9, **caractérisé en ce que** les supports de dessin (2) sont disposés de telle sorte qu'ils recouvrent les angles d'espace obtenus par la surface (14) réfléchissante.

**Fig. 1**

**Fig. 2**

Fig. 3

Fig. 4

Fig. 5

$a = z_K + Z_{S2} - 2h_2$

$X_{S1}, Z_{S1}$

$X_{S2}, Z_{S2}$

$X_K, Z_{K2}$

$h_2$

$h_1$

$X_K - X_{S2}$

$X_{S1}, Z_{S1}$

$X_{S2}, Z_{S2}$

$X_K, Z_{K2}$

$h_2$

$h_1$

$b = z_K + Z_{S1} - 2h_1$

$X_K - X_{S1}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757106 A1
- DE 10345586 A1
- DE 10127304 A1
- WO 2005031251 A1

**In der Beschreibung aufgeführte Nicht-Patentliteratur**

- **C. Quan et al.** Shape measurement of small objects using LCD fringe projection with phase shifting. *Opt. Comm.,* 2001, vol. 189, 21-29